# EUROPEAN PATENT SPECIFICATION

(11) **EP 4 009 230 B1**
(45) Date of publication and mention of the grant of the patent: **12.02.2025**
(21) Application number: 20859284.0
(22) Date of filing: 30.06.2020
(51) Int. Cl.: G21D 3/08, G06F 18/10

(54) **CURRENT WAVEFORM FLUCTUATION STARTING POINT IDENTIFICATION METHOD, ELECTRONIC DEVICE AND READABLE STORAGE MEDIUM**
VERFAHREN ZUR IDENTIFIZIERUNG DES STARTPUNKTES EINER AKTUELLEN WELLENFORMFLUKTUATION, ELEKTRONISCHE VORRICHTUNG UND LESBARES SPEICHERMEDIUM
PROCÉDÉ D'IDENTIFICATION DE POINT DE DÉPART DE FLUCTUATION DE FORME D'ONDE DE COURANT, DISPOSITIF ÉLECTRONIQUE, ET SUPPORT DE STOCKAGE LISIBLE

(30) Priority: 28.08.2019 CN 201910804871
(43) Date of publication of application: 08.06.2022
(73) Proprietor: China Nuclear Power Technology Research Institute Co., Ltd., Futian District Shenzhen Guangdong 518029 (CN); China General Nuclear Power Corporation, Futian District Shenzhen Guangdong 518029 (CN); CGN Power Co., Ltd., Futian District Shenzen Guangdong 518029 (CN)
(72) Inventor: MA, Junchao, Shenzhen, Guangdong 518029 (CN); ZHOU, Qi, Shenzhen, Guangdong 518029 (CN); LI, Dongdong, Shenzhen, Guangdong 518029 (CN); LI, Tao, Shenzhen, Guangdong 518029 (CN)
(74) Representative: Mewburn Ellis LLP
(86) International application number: PCT/CN2020/099057
(87) International publication number: WO 2021/036483

(56) References cited:
- CN-A- 1 968 228
- CN-A- 102 542 262
- CN-A- 102 542 262
- CN-A- 108 152 674
- CN-A- 108 701 219
- CN-A- 109 374 953
- CN-A- 110 503 069
- US-A- 4 125 432
- US-A- 5 999 583
- US-A1- 2015 335 948

## Description

### FIELD OF THE INVENTION

The invention relates to a signal waveform identification technology, in particular to a technology capable of effectively identifying a fluctuation start point of a current waveform of a coil current in a control rod drive mechanism of a nuclear power plant.

### BACKGROUND OF THE INVENTION

During start-up, power conversion and shutdown of the nuclear power plant, the reactivity of the reactor is controlled by controlling the movements of the control rods such as lifting, inserting and holding, so as to ensure that the reactor is always in a controlled state. The control rods are usually clustered as a temperature rod cluster, a power rod cluster, a shutdown rod cluster, for example, according to different positions and functions of the control rods in the core. Four control rods in the same cluster are arranged symmetrically in the reactor core (control rods in the center of the reactor core are a separate cluster), and linked while running.

A control rod drive mechanism (electromagnetic coil, CRDM) is used to achieve the movements of the control rods such as lifting, inserting and holding, which is connected to the control rods through a drive rod assembly. Generally, the control rod drive mechanism adopts a stepwise magnetic lifting manner, and generally includes three electromagnetic coils, namely a lifting coil (LC), a movable gripper coil (MG coil), and a stationary gripper coil (SG coil). The electromagnetic coils and the yokes of the coil assembly and the iron core parts corresponding to the gripper assembly respectively constitute three electromagnets, namely a lifting electromagnet, a movable electromagnet and a stationary electromagnet, from top to bottom. Specifically, the LC is excited to cause the lifting armature to attract thereby driving the movable gripper to advance a step pitch; while the LC is demagnetized to separate the lifting armature thereby driving the movable gripper to reset. The MG coil is excited to cause the movable armature to attract thereby driving the connecting rod to move upward, so that the movable gripper swings into the annular groove of the driving rod and then engages with the annular teeth of the driving rod; while the MG coil is demagnetized to separate the movable armature to drive the connecting rod to descend, so that the movable gripper swings out of the annular groove of the driving rod and then disengages from the annular teeth of the driving rod. The SG coil is excited to cause the stationary armature to attract thereby driving the connecting rod to move upward, so that the stationary gripper swings into the annular groove of the driving rod and then engages with the annular teeth of the driving rod; while the SG coil is demagnetized to separate the stationary armature thereby driving the connecting rod to descend, so that the stationary gripper swings out of the annular groove of the driving rod and then disengages from the annular teeth of the driving rod.

The control system of control rods sends different currents to the three electromagnetic coils in the preset sequence to control the excitation and demagnetization of the coils, so that the core components of the three electromagnets in the corresponding gripper assembly run to control the motions of the driving rods thereby controlling the control rods to be lifted, inserted or stationary. As known, once the action time of gripper fails, the control rods may be out of control and there will be failures such as rod disengagement or rod dropping. Therefore, it is necessary to monitor the action time of the gripper during the whole process of lifting and inserting rods, that is, it's critical to calculate the start time and end time of the gripper action. Especially, it's required to accurately identify the start point of the coil current.

Chinese application CN200610145682.0 discloses a method of waveform identification in signal processing, which relies on existing signal data to identify waveforms. Such a method compares the type and amplitude of the signal edge with the corresponding stored waveform to determine whether the signal edge is valid so as to calculate the pulse width, which is difficult to accurately determine a start point of a rising or falling waveform however.

Chinese application CN201210001045.1 discloses a waveform identification method based on the waveform library of characteristic operating conditions of high-speed rail running. The method relies on the waveform library of characteristic operating conditions to analyze abnormal waveforms, and also needs to be established on the basis of a large number of original waveforms to identify existing waveforms. It's difficult to accurately determine a start point of a rising or falling waveform.
US 5,999,583 A discloses a method and apparatus for control rod drive mechanism analysis using coil current signals.
US 4,125,432 A discloses a method and apparatus for operating magnetic stepping-type mechanisms for nuclear reactor control rods.
CN 1968228 A discloses a method for waveform recognition in signal processing.

Therefore, there is an urgent need for a current waveform algorithm to accurately determine a start point of a fluctuation in a waveform which can solve the above problems.

### SUMMARY OF THE INVENTION

The invention is set out in the appended claims. Objectives of the invention are to provide an identification method of a fluctuation start point in a current waveform, an electronic device, and a readable storage medium, which can accurately identify the position of the fluctuation start point in the waveform, and obtain a quick identification speed.

In comparison with the prior art, the method of the present invention firstly identifies and extracts a fluctuant waveform segment in the total current waveform, and then compares the value of each data point in the fluctuant waveform segment with the value of the stationary waveform segment in front of the fluctuant waveform segment to determine an abnormal point with large fluctuation, and then backward searches a start point of such a fluctuation from the abnormal point. In such a way, on the one hand, values in the stationary waveform segment are considered as the reference values of the fluctuant waveform segment, which can not only effectively eliminate other interferences such as data acquisition, but also make the reference values change with the change of the interference environment, thus the result is accurate. On the other hand, the method of firstly searching a first data point with abnormal fluctuation then backward searching the start point of the fluctuation has a fast calculation speed and an identification speed since there is no need to calculate a difference between each data point and the previous data point.

### BRIEF DESCRIPTION OF THE DRAWINGS

FIG. 1 is a flowchart of a method for identifying a fluctuation start point in a current waveform according to the present invention.
FIG. 2 is a schematic diagram of a fluctuant waveform segment in the method for identifying a fluctuation start point in a current waveform according to the present invention.
FIG. 3 is a structure diagram of an electronic device according to the present invention.

### DETAILED DESCRIPTION OF ILLUSTRATED EMBODIMENTS

In order to describe the technical content, structural features, achieved objects and effects of the present invention in detail, the following detailed description is given in conjunction with the embodiments and the accompanying drawings.

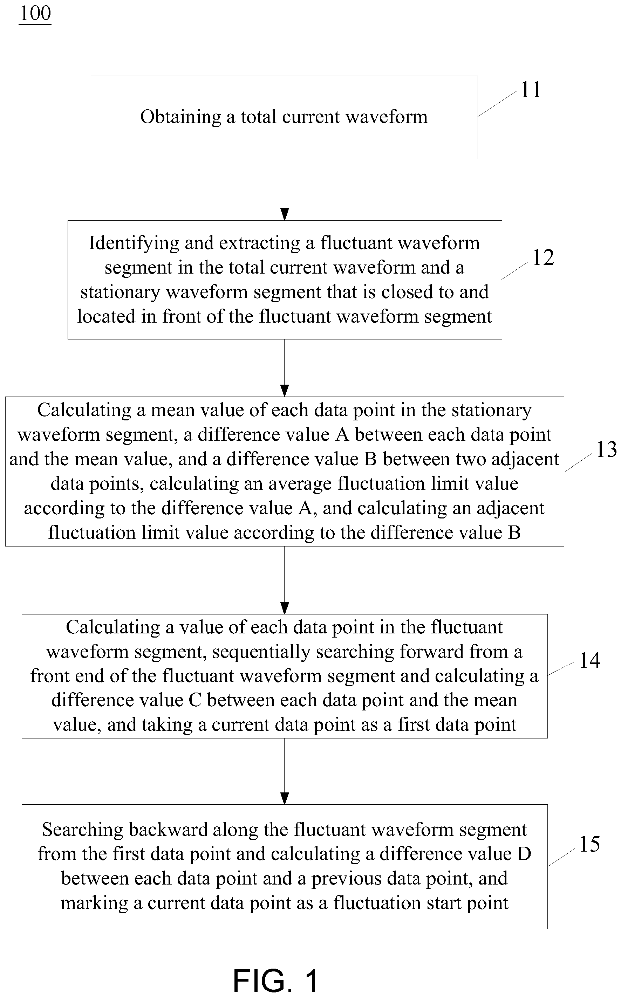

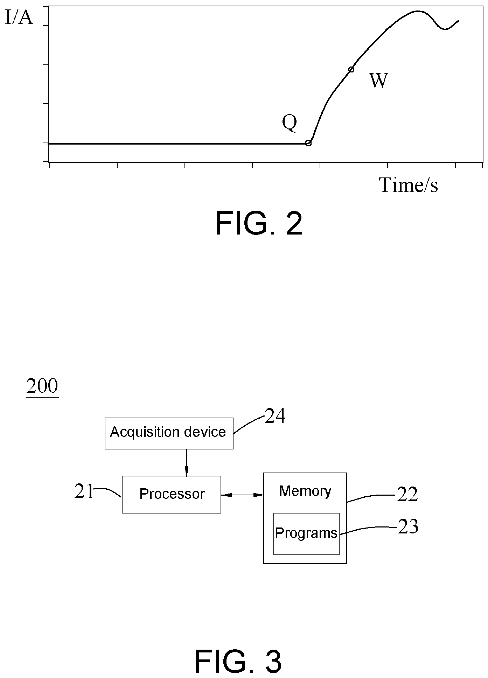

Referring to FIG. 1, a method 100 for identifying a fluctuation start point in a current waveform according to the present invention includes the following steps: (11) obtaining a total current waveform; (12) identifying and extracting a fluctuant waveform segment in the total current waveform and a stationary waveform segment that is closed to and located in front of the fluctuant waveform segment; (13) calculating a mean value of each data point in the stationary waveform segment, a difference value A between each data point and the mean value, and a difference value B between two adjacent data points, calculating an average fluctuation limit value according to the difference value A, and calculating an adjacent fluctuation limit value according to the difference value B; (14) calculating a value of each data point in the fluctuant waveform segment, sequentially searching forward from a front end of the fluctuant waveform segment and calculating a difference value C between each data point and the mean value, and taking a current data point as a first data point W(as shown in FIG. 2) once the difference value C exceeds the average fluctuation limit value (namely the absolute value of the difference value C is greater than that of the mean fluctuation limit); and (15) searching backward along the fluctuant waveform segment from the first data point and calculating a difference value D between each data point and a previous data point, and marking a current data point as a fluctuation start point Q (as shown in FIG. 2) once the difference value D does not exceed the adjacent fluctuation limit value (namely, the absolute value of the difference value D is smaller than that of the adjacent fluctuation limit value). The fluctuant waveform segment can be a rising waveform segment or a falling waveform segment.

Specifically, the current waveform is a waveform of a coil current in a control rod drive mechanism of a nuclear power plant. The method of obtaining a total current waveform in step (11) includes collecting a waveform of the coil current in the control rod drive mechanism of the nuclear power plant to obtain a sampling waveform, and performing low-pass filtering on the sampling waveform to obtain the total current waveform.

Specifically, the manner of calculating an average fluctuation limit value according to the difference value A in step (13) includes multiplying the difference value A by a first preset coefficient to obtain the average fluctuation limit value.

Specifically, the manner of calculating an adjacent fluctuation limit value according to the difference value B in step (13) includes counting a difference distribution of the difference value B to obtain a probability of each difference value B, calculating a value expectation according to the probability of each difference value B to obtain an expected fluctuation value, and obtaining the adjacent fluctuation limit value according to the expected fluctuation value. In such a manner, the sum of the probabilities of the difference values B that are less than or equal to the adjacent fluctuation limit value is greater than or equal to a preset percentage (for example, 85 percent, etc.).

Specifically, the manner of obtaining the adjacent fluctuation limit value according to the expected fluctuation value includes multiplying the expected fluctuation value by a second preset coefficient to obtain the adjacent fluctuation limit value.

The above first preset coefficient and second preset coefficient can be determined from the historical waveform data, and the thresholds of the first preset coefficient and the second preset coefficient need to be smaller than a value that is obtained by dividing the maximum value of the corresponding waveform amplitude (difference A) by the mean value. The smaller threshold of the coefficient indicates that the start point Q is more closed to the stationary waveform segment.

Preferably, the method further includes searching a rising edge or a falling edge in a signal waveform according to a waveform variation tendency, determining whether an amplitude of the rising edge and the falling edge exceeds a preset amplitude, if yes, capturing a waveform segment with the rising edge or the falling edge and several data points behind the rising edge or the falling edge as the fluctuant waveform segment. The number of the above-mentioned several data points is determined by the technicians according to the first preset coefficient. In this embodiment, the number of ranging 100-300 data points is selected.

Specifically, the manner of identifying a fluctuant waveform segment in the total current waveform includes sequentially indexing five data points (or other data points greater than or equal to three) in all data points in the total current waveform, if the five data points are sequentially increased or decreased, and the variation amplitude between the 5th data point and the 1st data point exceeds a preset range (for example, 0.2, or other values according to actual needs), then recognizing a rising waveform or a falling waveform corresponding to the waveform, and capturing the waveform segment with 150 data points behind the current five data points as the fluctuant waveform segment. Optionally, other methods may be used to recognize the fluctuant waveform segment, which is not limited.

Specifically, in step (12), the manner of identifying and extracting a stationary waveform segment that is closed to and located in front of the fluctuant waveform segment includes capturing a waveform segment with 50 data points (or other data points greater than or equal to 10, and preferably between 30-100) in front of the current 5 data points as the stationary waveform segment. In another embodiment, a waveform segment with several data points in front of certain data points at the front end of the fluctuant waveform segment may be captured as the stationary waveform segment. For example, a waveform segment with 50 data points in front of the two data points at the front end of the fluctuant waveform segment is captured as the stationary waveform segment. The stationary waveform segment and the fluctuant waveform segment may be spaced with a few data points, or adjacent one another without any data point.

Referring to FIG. 3, the present invention also discloses an electronic device 200 including an acquisition device 24, one or more processors 21, a memory 22, and one or more programs 23. The one or more programs 23 are stored in the memory 22 and configured to be implemented by one or more processors 21. The acquisition device 24 is configured to acquire the coil current, the processor 21 is connected to the acquisition device 24 to obtain the coil current, and a total current waveform is generated according to the coil current. The programs 23 include instructions for executing the method of identifying a fluctuation start point in a current waveform 100 as described above.

## Claims

1. A computer-implemented method (100) for identifying a fluctuation start point in a total current waveform, the total current waveform being a waveform of a coil current in a control rod drive mechanism of a nuclear power plant, wherein the method uses a computer to perform steps comprising:
(1) obtaining (11) the total current waveform, identifying and extracting (12) a fluctuant waveform segment in the total current waveform and a stationary waveform segment that is close to and located in front of the fluctuant waveform segment; and
calculating (13) a mean value from each data point in the stationary waveform segment, and a difference value A between each data point and the mean value; and
(2) calculating (14) a value of each data point in the fluctuant waveform segment;
**characterised in that**:
step (1) further comprises:
calculating a difference value B between two adjacent data points;
calculating an average fluctuation limit value according to the difference value A; and
calculating an adjacent fluctuation limit value according to the difference value B;
step (2) further comprises:
sequentially searching forward from a front end of the fluctuant waveform segment and calculating a difference value C between each data point and the mean value, and
taking a current data point as a first data point once the difference value C exceeds the average fluctuation limit value; and
the method further comprises:
(3) searching backward (15) along the fluctuant waveform segment from the first data point and calculating a difference value D between each data point and a previous data point, and
marking a current data point as a fluctuation start point once the difference value D does not exceed the adjacent fluctuation limit value.

2. The computer-implemented method for identifying a fluctuation start point in a total current waveform according to claim 1, wherein said calculating an average fluctuation limit value according to the difference value A in step (1) comprises multiplying the difference value A by a first preset coefficient to obtain the average fluctuation limit value.

3. The computer-implemented method for identifying a fluctuation start point in a total current waveform according to claim 1, wherein said calculating an adjacent fluctuation limit value according to the difference value B comprises counting a difference distribution of the difference value B to obtain a probability of each difference value B, calculating a value expectation according to the probability of each difference value B to obtain an expected fluctuation value, and obtaining the adjacent fluctuation limit value according to the expected fluctuation value.

4. The computer-implemented method for identifying a fluctuation start point in a total current waveform according to claim 3, wherein said obtaining the adjacent fluctuation limit value according to the expected fluctuation value comprises multiplying the expected fluctuation value by a second preset coefficient to obtain the adjacent fluctuation limit value.

5. The computer-implemented method for identifying a fluctuation start point in a total current waveform according to claim 1, wherein said identifying a fluctuant waveform segment in the total current waveform comprises finding a rising edge or a falling edge in a signal waveform according to a waveform variation tendency, determining whether an amplitude of the rising edge and the falling edge exceeds a preset amplitude, if yes, capturing a waveform segment with the rising edge or the falling edge and preset data points behind the rising edge or the falling edge as the fluctuant waveform segment.

6. The computer-implemented method for identifying a fluctuation start point in a total current waveform according to claim 1, wherein said identifying and extracting a stationary waveform segment that is close to and located in front of the fluctuant waveform segment comprises capturing a waveform segment with several data points located in front of a front end of the fluctuant waveform segment as the stationary waveform segment.

7. The computer-implemented method for identifying a fluctuation start point in a total current waveform according to claim 1, wherein said obtaining the total current waveform comprises collecting a waveform of the coil current in the control rod drive mechanism of the nuclear power plant to obtain a sampling waveform, and performing low-pass filtering on the sampling waveform to obtain the total current waveform.

8. An electronic device (200), comprising:
an acquisition device (24), configured to collect a coil current in a control rod drive mechanism of a nuclear power plant;
one or more processors (21), connected to the acquisition device to obtain the coil current, and configured to generate a total current waveform according to the coil current;
a memory (22); and
one or more programs (23), stored in the memory and configured to be executed by one or more processors, the programs comprising instructions for executing the computer-implemented method for identifying a fluctuation start point in a total current waveform according to any one of claims 1 -7.

9. A computer-readable storage medium, comprising computer programs used in conjunction with an electronic device having a memory, wherein the computer programs are configured to be executed by a processor to perform the computer-implemented method for identifying a fluctuation start point in a current waveform according to any one of claims 1-7.

## Patentansprüche

1. Computerimplementiertes Verfahren (100) zum Identifizieren eines Fluktuationsausgangspunkts in einer Gesamt-Stromwellenform, wobei die Gesamt-Stromwellenform eine Wellenform eines Spulenstroms in einem Steuerstabantriebsmechanismus eines Atomkraftwerks ist, wobei das Verfahren einen Computer verwendet, um Schritte durchzuführen, die Folgendes umfassen:
(1) Erhalten (11) der Gesamt-Stromwellenform, Identifizieren und Extrahieren (12) eines fluktuierenden Wellenformsegments in der Gesamt-Stromwellenform und eines stationären Wellenformsegments, das in der Nähe des und vor dem fluktuierenden Wellenformsegment(s) angeordnet ist; und
Berechnen (13) eines Mittelwerts aus jedem Datenpunkt im stationären Wellenformsegment und eines Differenzwerts A zwischen jedem Datenpunkt und dem Mittelwert; und
(2) Berechnen (14) eines Werts jedes Datenpunkts im fluktuierenden Wellenformsegment;
**dadurch gekennzeichnet, dass**:
Schritt (1) ferner Folgendes umfasst:
Berechnen eines Differenzwerts B zwischen zwei benachbarten Datenpunkten;
Berechnen eines mittleren Fluktuationsgrenzwerts gemäß dem Differenzwert A; und
Berechnen eines benachbarten Fluktuationsgrenzwerts gemäß dem Differenzwert B;
Schritt (2) ferner Folgendes umfasst:
nacheinander Vorwärtsdurchsuchen ab einem Vorderende des fluktuierenden Wellenformsegments und Berechnen eines Differenzwerts C zwischen jedem Datenpunkt und dem Mittelwert und
Heranziehen eines aktuellen Datenpunkts als ersten Datenpunkt, sobald der Differenzwert C den mittleren Fluktuationsgrenzwert übersteigt; und
wobei das Verfahren ferner Folgendes umfasst:
(3) Rückwärtsdurchsuchen (15) entlang des fluktuierenden Wellenformsegments ab dem ersten Datenpunkt und Berechnen eines Differenzwerts D zwischen jedem Datenpunkt und einem vorangegangenen Datenpunkt und
Markieren eines aktuellen Datenpunkts als Fluktuationsausgangspunkt, sobald der Differenzwert D den benachbarten Fluktuationsgrenzwert nicht überschreitet.

2. Computerimplementiertes Verfahren zum Identifizieren eines Fluktuationsausgangspunkts in einer Gesamt-Stromwellenform nach Anspruch 1, wobei das Berechnen eines mittleren Fluktuationsgrenzwerts gemäß dem Differenzwert A in Schritt (1) das Multiplizieren des Differenzwerts A mit einem ersten voreingestellten Koeffizienten umfasst, um den mittleren Fluktuationsgrenzwert zu erhalten.

3. Computerimplementiertes Verfahren zum Identifizieren eines Fluktuationsausgangspunkts in einer Gesamt-Stromwellenform nach Anspruch 1, wobei das Berechnen eines benachbarten Fluktuationsgrenzwerts gemäß dem Differenzwert B das Zählen einer Differenzverteilung des Differenzwerts B, um eine Wahrscheinlichkeit für jeden Differenzwert B zu erhalten, das Berechnen einer Werterwartung gemäß der Wahrscheinlichkeit jedes Differenzwerts B, um einen erwarteten Fluktuationswert zu erhalten, und Erhalten des benachbarten Fluktuationsgrenzwerts gemäß dem erwarteten Fluktuationswert umfasst.

4. Computerimplementiertes Verfahren zum Identifizieren eines Fluktuationsausgangspunkts in einer Gesamt-Stromwellenform nach Anspruch 3, wobei das Erhalten des benachbarten Fluktuationsgrenzwerts gemäß dem erwarteten Fluktuationswert das Multiplizieren des erwarteten Fluktuationswerts mit einem zweiten voreingestellten Koeffizienten, um den benachbarten Fluktuationsgrenzwert zu erhalten, umfasst.

5. Computerimplementiertes Verfahren zum Identifizieren eines Fluktuationsausgangspunkts in einer Gesamt-Stromwellenform nach Anspruch 1, wobei das Identifizieren eines fluktuierenden Wellenformsegments in der Gesamt-Stromwellenform das Finden einer steigenden Flanke oder einer fallenden Flanke in einer Signalwellenform gemäß einer Wellenformvariationstendenz, das Bestimmen, ob eine Amplitude der steigenden Flanke und der fallenden Flanke eine voreingestellte Amplitude übersteigt, wenn ja, das Aufnehmen eines Wellenformsegments mit der steigenden Flanke oder der fallenden Flanke und das Voreinstellen von Datenpunkten hinter der steigenden Flanke oder der fallenden Flanke als fluktuierendes Wellenformsegment umfasst.

6. Computerimplementiertes Verfahren zum Identifizieren eines Fluktuationsausgangspunkts in einer Gesamt-Stromwellenform nach Anspruch 1, wobei das Identifizieren und Extrahieren eines stationären Wellenformsegments, das in der Nähe des und vor dem fluktuierenden Wellenformsegment(s) angeordnet ist, das Aufnehmen eines Wellenformsegments mit verschiedenen Datenpunkten, die vor einem Vorderende des fluktuierenden Wellenformsegments angeordnet sind, als das stationäre Wellenformsegment umfasst.

7. Computerimplementiertes Verfahren zum Identifizieren eines Fluktuationsausgangspunkts in einer Gesamt-Stromwellenform nach Anspruch 1, wobei das Erhalten der Gesamt-Stromwellenform das Abnehmen einer Wellenform des Spulenstroms im Steuerstabantriebsmechanismus des Atomkraftwerks, um eine Probenwellenform zu erhalten, und das Durchführen von Tiefpassfiltern an der Probenwellenform, um die Gesamt-Stromwellenform zu erhalten, umfasst.

8. Elektronische Vorrichtung (200), die Folgendes umfasst:
eine Erfassungsvorrichtung (24), die ausgelegt ist, um einen Spulenstrom in einem Steuerstabantriebsmechanismus eines Atomkraftwerks abzunehmen;
einen oder mehrere Prozessoren (21), die mit der Erfassungsvorrichtung verbunden sind, um den Spulenstrom zu erhalten, und ausgelegt sind, um eine Gesamt-Stromwellenform gemäß dem Spulenstrom zu erzeugen;
einen Speicher (22); und
ein oder mehrere Programme (23), die im Speicher gespeichert und ausgelegt sind, um durch einen oder mehrere Prozessoren ausgeführt zu werden, wobei die Programme Befehle zum Ausführen eines computerimplementierten Verfahrens zum Identifizieren eines Fluktuationsausgangspunkts in einer Gesamt-Stromwellenform nach einem der Ansprüche 1 bis 7 umfassen.

9. Computerlesbares Speichermedium, umfassend Computerprogramme, die in Verbindung mit einer elektronischen Vorrichtung, welche einen Speicher aufweist, verwendet werden, wobei die Computerprogramme ausgelegt sind, um durch einen Prozessor ausgeführt zu werden, um ein computerimplementiertes Verfahren zum Identifizieren eines Fluktuationsausgangspunkts in einer Gesamt-Stromwellenform nach einem der Ansprüche 1 bis 7 durchzuführen.

## Revendications

1. Procédé mis en œuvre par ordinateur (100) pour identifier un point de départ de fluctuation dans une forme d'onde de courant total, la forme d'onde de courant total étant une forme d'onde d'un courant de bobine dans un mécanisme d'entraînement de tige de commande d'une centrale nucléaire, dans lequel le procédé utilise un ordinateur pour effectuer des étapes consistant à :
(1) obtenir (11) la forme d'onde de courant total, identifier et extraire (12) un segment de forme d'onde fluctuante dans la forme d'onde de courant total et un segment de forme d'onde stationnaire qui est proche et situé en avant du segment de forme d'onde fluctuante ; et
calculer (13) une valeur moyenne à partir de chaque point de données dans le segment de forme d'onde stationnaire, et une valeur de différence A entre chaque point de données et la valeur moyenne ; et
(2) calculer (14) une valeur de chaque point de données dans le segment de forme d'onde fluctuante ;
**caractérisé en ce que** :
l'étape (1) comprend en outre les étapes consistant à :
calculer une valeur de différence B entre deux points de données adjacents ;
calculer une valeur limite de fluctuation moyenne selon la valeur de différence A ; et
calculer une valeur limite de fluctuation adjacente en fonction de la valeur de différence B ;
l'étape (2) comprend en outre les étapes consistant à :
rechercher séquentiellement vers l'avant à partir d'une extrémité avant du segment de forme d'onde fluctuante et calculer une valeur de différence C entre chaque point de données et la valeur moyenne, et
prendre un point de données actuel comme premier point de données une fois que la valeur de différence C dépasse la valeur limite de fluctuation moyenne ; et
le procédé comprend en outre les étapes consistant à :
(3) rechercher en arrière (15) le long du segment de forme d'onde fluctuante à partir du premier point de données et calculer une valeur de différence D entre chaque point de données et un point de données précédent, et
marquer un point de données de courant comme point de départ de fluctuation une fois que la valeur de différence D ne dépasse pas la valeur limite de fluctuation adjacente.

2. Procédé mis en œuvre par ordinateur pour identifier un point de départ de fluctuation dans une forme d'onde de courant total selon la revendication 1, dans lequel ledit calcul d'une valeur limite de fluctuation moyenne selon la valeur de différence A à l'étape (1) comprend une multiplication de la valeur de différence A par un premier coefficient prédéfini pour obtenir la valeur limite de fluctuation moyenne.

3. Procédé mis en œuvre par ordinateur pour identifier un point de départ de fluctuation dans une forme d'onde de courant total selon la revendication 1, dans lequel ledit calcul d'une valeur limite de fluctuation adjacente selon la valeur de différence B comprend un comptage d'une distribution de différence de la valeur de différence B pour obtenir une probabilité de chaque valeur de différence B, un calcul d'une attente de valeur selon la probabilité de chaque valeur de différence B pour obtenir une valeur de fluctuation attendue, et une obtention de la valeur limite de fluctuation adjacente selon la valeur de fluctuation attendue.

4. Procédé mis en œuvre par ordinateur pour identifier un point de départ de fluctuation dans une forme d'onde de courant total selon la revendication 3, dans lequel ladite obtention de la valeur limite de fluctuation adjacente selon la valeur de fluctuation attendue comprend une multiplication de la valeur de fluctuation attendue par un second coefficient prédéfini pour obtenir la valeur limite de fluctuation adjacente.

5. Procédé mis en œuvre par ordinateur pour identifier un point de départ de fluctuation dans une forme d'onde de courant total selon la revendication 1, dans lequel ladite identification d'un segment de forme d'onde fluctuante dans la forme d'onde de courant total comprend une recherche d'un bord montant ou d'un bord descendant dans une forme d'onde de signal selon une tendance de variation de forme d'onde, une détermination qu'une amplitude du bord montant et du bord descendant dépasse une amplitude prédéfinie, si tel est le cas, une capture d'un segment de forme d'onde avec le bord montant ou le bord descendant et des points de données prédéfinis derrière le bord montant ou le bord descendant en tant que segment de forme d'onde fluctuante.

6. Procédé mis en œuvre par ordinateur pour identifier un point de départ de fluctuation dans une forme d'onde de courant total selon la revendication 1, dans lequel ladite identification et ladite extraction d'un segment de forme d'onde stationnaire qui est proche et situé en face du segment de forme d'onde fluctuante comprennent une capture d'un segment de forme d'onde avec plusieurs points de données situés en face d'une extrémité avant du segment de forme d'onde fluctuante en tant que segment de forme d'onde stationnaire.

7. Procédé mis en œuvre par ordinateur pour identifier un point de départ de fluctuation dans une forme d'onde de courant total selon la revendication 1, dans lequel ladite obtention de la forme d'onde de courant total comprend une collecte d'une forme d'onde du courant de bobine dans le mécanisme d'entraînement de tige de commande de la centrale nucléaire pour obtenir une forme d'onde d'échantillonnage, et une réalisation d'un filtrage passe-bas sur la forme d'onde d'échantillonnage pour obtenir la forme d'onde de courant total.

8. Dispositif électronique (200), comprenant :
un dispositif d'acquisition (24), configuré pour collecter un courant de bobine dans un mécanisme d'entraînement de tige de commande d'une centrale nucléaire ;
un ou plusieurs processeurs (21), connectés au dispositif d'acquisition pour obtenir le courant de bobine, et configurés pour générer une forme d'onde de courant total selon le courant de bobine ;
une mémoire (22) ; et
un ou plusieurs programmes (23), stockés dans la mémoire et configurés pour être exécutés par un ou plusieurs processeurs, les programmes comprenant des instructions pour exécuter le procédé mis en œuvre par ordinateur pour identifier un point de départ de fluctuation dans une forme d'onde de courant total selon l'une quelconque des revendications 1 à 7.

9. Support de stockage lisible par ordinateur, comprenant des programmes informatiques utilisés conjointement avec un dispositif électronique ayant une mémoire, dans lequel les programmes informatiques sont configurés pour être exécutés par un processeur pour exécuter le procédé mis en œuvre par ordinateur pour identifier un point de départ de fluctuation dans une forme d'onde de courant selon l'une quelconque des revendications 1 à 7.
